# EUROPÄISCHE PATENTSCHRIFT

(11) **EP 3 831 655 B1**
(45) Veröffentlichungstag und Bekanntmachung des Hinweises auf die Patenterteilung: **08.03.2023**
(21) Anmeldenummer: 19213870.9
(22) Anmeldetag: 05.12.2019
(51) Int. Cl.: B60Q 1/26, B60Q 1/28, B60K 11/08, B60R 19/52, F21S 43/14, F21S 43/15, F21S 43/20, F21S 43/31, F21S 43/40

(54) **LAMELLENVORRICHTUNG FÜR EIN KRAFTFAHRZEUG**
LAMELLAR DEVICE FOR A MOTOR VEHICLE
DISPOSITIF À LAMELLES POUR VÉHICULE AUTOMOBILE

(43) Veröffentlichungstag der Anmeldung: 09.06.2021
(73) Patentinhaber: ZKW Group GmbH, 3250 Wieselburg (AT)
(72) Erfinder: Maier, Christian, 3281 Oberndorf an der Melk (AT)
(74) Vertreter: Patentanwaltskanzlei Matschnig & Forsthuber OG

(56) Entgegenhaltungen:
- DE-A1- 10 340 723
- DE-A1-102014 015 185
- DE-U1-202012 008 792
- DE-U1-202017 102 639
- JP-A- 2015 220 205
- US-A1- 2016 090 027

## Beschreibung

Die Erfindung betrifft eine Lamellenvorrichtung für ein Kraftfahrzeug.

Die Erfindung betrifft auch eine Beleuchtungsvorrichtung für ein Kraftfahrzeug in Form einer Lamellenvorrichtung.

Ferner betrifft die Erfindung ein Kraftfahrzeug, umfassend eine Lamellenvorrichtung.

Im Stand der Technik sind Lamellenvorrichtungen für Kraftfahrzeuge bekannt, wobei eine Beleuchtung der Lamellenvorrichtung mittels einer hinter der Lamellenvorrichtung angeordneten Lichtquelle erfolgt. Dies führt meist zu einer unzureichenden oder ungleichmäßigen Beleuchtung.

DE 20 2012 008792 U1 offenbart eine Lamellenvorrichtung für ein Kraftfahrzeug, wobei die Lamellenvorrichtung zumindest eine Rahmenvorrichtung und zumindest eine Beleuchtungseinheit umfasst, wobei an der Rahmenvorrichtung mehrere Lamellen ausgebildet sind, wobei die Lamellen in ersten Abständen zueinander beabstandet sind, wobei die Abstände zwischen zwei benachbarten Lamellen jeweils gleich groß sind, wobei die Rahmenvorrichtung und die mehreren Lamellen in einer Ebene liegen, wobei die Beleuchtungseinheit zumindest eine Lichtquelle und ein Optikelement umfasst, wobei die Lichtquelle dazu eingerichtet ist, Licht zu erzeugen und in einer Lichtausbreitungsrichtung abzustrahlen, wobei das Optikelement in Lichtausbreitungsrichtung nach der Lichtquelle angeordnet ist, wobei das Optikelement derart ausgestaltet ist, dass das Licht der Lichtquelle durch das Optikelement durchtritt, wobei die Beleuchtungseinheit mehrere Lichtquellen und mehrere Optikelemente aufweist, wobei die Rahmenvorrichtung eine Rahmenoberseite und eine der Rahmenoberseite gegenüberliegende Rahmenunterseite aufweisen, wobei sich die Lamellen von der Rahmenoberseite zur Rahmenunterseite erstrecken, wobei die Rahmenvorrichtung die räumliche Ausdehnung der Lamellen begrenzt.

Die Aufgabe der vorliegenden Erfindung besteht darin, die Nachteile des Standes der Technik zu lindern bzw. zu beseitigen. Die Erfindung setzt sich daher insbesondere zum Ziel, eine Lamellenvorrichtung zu schaffen, bei welcher die Beleuchtung der Lamellen der Lamellenvorrichtung verbessert wird.

Diese Aufgabe wird durch eine Lamellenvorrichtung mit den Merkmalen von Anspruch 1 gelöst. Bevorzugte Ausführungen sind in den abhängigen Ansprüchen angegeben.

Erfindungsgemäß umfasst die Lamellenvorrichtung zumindest eine Rahmenvorrichtung und zumindest eine Beleuchtungseinheit, wobei an der Rahmenvorrichtung mehrere Lamellen befestigt sind, wobei die Lamellen in ersten Abständen zueinander beabstandet sind, wobei vorzugsweise die ersten Abstände zwischen zwei benachbarten Lamellen jeweils gleich groß sind, wobei die Rahmenvorrichtung und die mehreren Lamellen in einer, insbesondere derselben, Ebene liegen, wobei die Beleuchtungseinheit zumindest eine Lichtquelle und ein Optikelement umfasst, wobei die Lichtquelle dazu eingerichtet ist, Licht zu erzeugen und in einer Lichtausbreitungsrichtung abzustrahlen, wobei das Optikelement in Lichtausbreitungsrichtung nach der Lichtquelle angeordnet ist, wobei das Optikelement derart ausgestaltet ist, dass das Licht der Lichtquelle durch das Optikelement durchtritt und sich nach dem Durchtritt in einer Beleuchtungsrichtung ausbreitet, wobei die

Optikelemente als Linsen ausgebildet sind, wobei die Beleuchtungseinheit an der Rahmenvorrichtung derart angeordnet ist, dass sich das Licht, welches aus dem Optikelement austritt, zwischen zwei benachbarten Lamellen ausbreitet, wobei die Beleuchtungseinheit mehrere Lichtquellen und mehrere Optikelemente aufweist, wobei die Rahmenvorrichtung eine Rahmenoberseite und eine der Rahmenoberseite gegenüberliegende Rahmenunterseite aufweisen, wobei sich die Lamellen von der Rahmenoberseite zur Rahmenunterseite erstrecken, wobei die Rahmenvorrichtung die räumliche Ausdehnung der Lamellen begrenzt, wobei die mehreren Lichtquellen an einer, vorzugsweise planen, Oberfläche einer Lichtquellenhalterung in, insbesondere gleichmäßigen, zweiten Abständen zueinander angeordnet sind, wobei die mehreren Optikelemente an einer Optikelementhalterung angeordnet sind, welche eine Oberseite und eine Unterseite aufweist, wobei die mehreren Optikelemente an der Optikelementhalterung in, vorzugsweise gleichmäßigen, dritten Abständen zueinander angeordnet sind, wobei die optischen Achsen der Optikelemente jeweils orthogonal zur Oberseite und Unterseite der Optikelementhalterung orientiert sind, und wobei die Lichtquellenhalterung zu der Optikelementhalterung derart angeordnet ist, dass die Oberfläche der Lichtquellenhalterung, an der die mehreren Lichtquellen befestigt sind, der Oberseite der Optikelementhalterung derart zugewandt ist, dass jeder Lichtquelle ein, vorzugsweise genau ein, Optikelement gegenüberliegt, wodurch ein Lichtquellen-Optikelement-Paar gebildet ist, wobei jede Lichtquelle Licht auf das der Lichtquelle gegenüberliegende Optikelement abstrahlt, wobei jedes Optikelement dazu eingerichtet ist, das Licht der ihr gegenüberliegenden Lichtquelle in einer Beleuchtungsrichtung abzustrahlen, wobei die Beleuchtungsrichtungen der einzelnen Lichtquellen-Optikelement-Paare im Wesentlichen parallel zueinander sind.

Die Rahmenvorrichtung kann beispielsweise rechteckig, quadratisch, oval, oder dgl. ausgebildet sein. Die Rahmenvorrichtung kann aus vier Rahmenseiten ausgebildet sein, welche dergestalt miteinander verbunden sind, dass ein in sich geschlossener Rahmen gebildet ist. Die Lamellen können im Wesentlichen streifenförmig ausgebildet sein, wobei die ersten Abstände zwischen zwei benachbarten Lamellen gleich oder unterschiedlich sein können. Die Ebene, in welcher die Rahmenvorrichtung liegt, ist insbesondere die gleiche Ebene in welche sich die Lamellen erstrecken. Die Lamellen sind vorzugsweise parallel zu zumindest einer Seitenfläche der Rahmenvorrichtung. Die Beleuchtungsrichtung kann parallel zu der Längserstreckung der Lamellen sein. Alternativ dazu kann die Beleuchtungsrichtung auch unter einem Winkel zu der Längserstreckung der Lamellen orientiert sein. Mit anderen Worten, kann die Beleuchtungseinheit Licht parallel bzw. zwischen zwei benachbarten Lamellen abstrahlen, oder Licht direkt auf eine Lamelle abstrahlen, wobei das Licht in weiterer Folge von der beleuchteten Lamelle reflektiert wird und der reflektierte Lichtstrahl eine benachbarte Lamelle beleuchtet. Somit kann eine erste Lamelle direkt und eine zweite, benachbarte Lamelle indirekt beleuchtet werden.

Bevorzugt ist die Rahmenvorrichtung als ein in sich geschlossener Rahmen ausgebildet.

Insbesondere sind die Lamellen zwischen dem bzw. innerhalb des in sich geschlossenen Rahmens angeordnet.

Die Beleuchtungsrichtung kann von der Rahmenoberseite zur Rahmenunterseite, im Wesentlichen parallel zur Längsrichtung der Lamellen, verlaufen. Damit kann die Beleuchtung der Lamellen besonders effiziert erfolgen. Damit kann im Wesentlichen das gesamte Licht der Beleuchtungseinheit in der Ebene, in welcher die Rahmenvorrichtung und die Lamellen angeordnet sind, abgestrahlt werden. Streulicht, welches außerhalb dieser Ebene abgestrahlt wird, kann somit minimiert werden.

Die Beleuchtungseinheit weist mehrere Lichtquellen und mehrere Optikelemente auf, wobei bei einer Anzahl von n Lamellen, die Beleuchtungseinheit vorzugsweise n oder n-1 Lichtquellen und n oder n-1 Optikelemente aufweist. Dadurch kann vorteilhafterweise jeder Lamellenzwischenraum oder jede Lamelle jeweils von einer Lichtquelle beleuchtet werden, wodurch die Beleuchtung der Lamellenvorrichtung besonders effiziert erfolgen kann.

Die Lichtquellenhalterung kann beispielsweise eine Leiterplatte und die Optikelementhalterung kann beispielsweise eine transparente Platte, beispielsweise eine Abdeckscheibe, sein, wobei die Optikelemente mit der Optikelementhalterung einstückig bzw. einteilig ausgebildet sind. Mit anderen Worten sind die Optikelemente in die Optikelementhalterung integriert und mit der Optikelementhalterung als gemeinsames Bauteil ausgebildet. Damit ergibt sich der Vorteil, dass die Optikelemente mit der Optikelementhalterung in einem einzigen Verfahrensschritt zusammen hergestellt werden können, wodurch die Produktionskosten reduziert werden.

Die Optikelementhalterung kann im Wesentlichen plattenförmig ausgestaltet sein.

Vorzugsweise sind die Länge und die Breite der Optikelementhalterung und der Lichtquellenhalterung im Wesentlichen gleich. Insbesondere kann die Lichtquellenhalterung in einem Gehäuse aufgenommen sein, wobei die Optikelementhalterung als transparente Abdeckscheibe des Gehäuses ausgebildet sein kann. Das Gehäuse ist vorzugsweise länglich ausgestaltet.

Vorzugsweise sind die ersten, zweiten und dritten Abstände gleich. Damit ergibt sich der Vorteil, dass im Wesentlichen das gesamte von jeweils einer Lichtquelle abgestrahlte Licht auf ein Optikelement abgestrahlt wird, wodurch unerwünschtes Streulicht minimiert wird. Dadurch können die Lamellenzwischenräume oder die Lamellen besonders effizient beleuchtet werden.

Die Lichtquellenhalterung und die Optikelementhalterung sind vorzugsweise plattenförmig und parallel zueinander orientiert, wobei der Abstand zwischen der Lichtquellenhalterung und der Optikelementhalterung insbesondere 1-2 mm, vorzugsweise 3-5 mm, besonders bevorzugt 6-10 mm betragen kann. Die Lichtquellenhalterung kann in einem Gehäuse aufgenommen sein, wobei die Optikelementhalterung als Verschlusselement oder Abdeckelement, insbesondere als Abdeckscheibe, des Gehäuses ausgebildet sein kann.

Die Lichtquellenhalterung und die Optikelementhalterung können an der Rahmenvorrichtung derart angeordnet sein, dass ein Lamellenzwischenraum, welcher zwischen zwei benachbarten Lamellen gebildet ist, von einem, vorzugsweise genau einem, Lichtquellen-Optikelement-Paar beleuchtbar ist, wobei die jeweiligen Beleuchtungsrichtungen der Lichtquellen-Optikelement-Paare jeweils parallel zur Längsrichtung der entsprechenden Lamellen verlaufen. Es können auch zumindest zwei oder mehrere Lichtquellen-Optikelement-Paare jeweils einen Lamellenzwischenraum oder eine Lamelle beleuchten. Vorteilhafterweise kann damit eine besonders gleichmäßige Beleuchtung aller Lamellenzwischenräume oder aller Lamellen erfolgen.

Die Lichtquellenhalterung und die Optikelementhalterung können an der Rahmenoberseite und/oder der Rahmenunterseite der Rahmenvorrichtung angeordnet sein.

Die Optikelemente sind erfindungsgemäß als Linsen ausgebildet. Die Linsen sind insbesondere dazu eingerichtet, das Licht der Lichtquellen als Lichtkegel zwischen zwei benachbarten Lamellen oder auf eine Lamelle abzustrahlen. Die Linsen können auch als Kollimatorlinsen (TIR-Linsen) ausgebildet sein, welche dazu eingerichtet sind, dass die Lichtstrahlen der jeweiligen Lichtquelle beim Austritt aus der Linse parallel zu einander und parallel zur Längsrichtung der Lamellen verlaufen.

Die Rahmenvorrichtung kann als Kühlergrill für ein Kraftfahrzeug, ausgebildet sein. In einem Zustand, in dem der Kühlergrill an einem Kraftfahrzeug befestigt ist, ist die Beleuchtungseinheit vorzugsweise an einer Oberseite des Kühlergrills dergestalt befestigt, dass das Licht der Lichtquellen nach unten, im Wesentlichen in Richtung einer Fahrbahn, abgestrahlt wird. Dadurch wird eine Blendung eines Verkehrsteilnehmers verhindert. Ferner ist die Beleuchtungseinheit vorzugsweise dergestalt an dem Kühlergrill befestigt, dass die Beleuchtungseinheit bei einer Betrachtung des Kühlergrills von außerhalb des Kraftfahrzeugs nicht sichtbar ist.

Erfindungsgemäß ist eine Beleuchtungsvorrichtung für ein Kraftfahrzeug in Form einer Lamellenvorrichtung vorgesehen.

Erfindungsgemäß ist ein Kraftfahrzeug vorgesehen, welches eine Lamellenvorrichtung oder eine Beleuchtungsvorrichtung umfasst.

Im Rahmen dieser Beschreibung sind die Begriffe "oben", "unten", "horizontal", "vertikal", etc. als Angaben der Ausrichtung zu verstehen, wenn die Lamellenvorrichtung in normaler Benutzungsstellung angeordnet ist, nachdem sie in einem Kraftfahrzeug eingebaut wurde.

Die Erfindung wird nachstehend anhand eines bevorzugten Ausführungsbeispiels, auf das sie jedoch nicht beschränkt sein soll, noch weiter erläutert. In den Zeichnungen zeigt:
Fig. 1 eine erfindungsgemäße Lamellenvorrichtung;
Fig. 2 eine Seitenansicht der Lamellenvorrichtung gemäß Fig. 1;
Fig. 3 eine Beleuchtungseinheit der Lamellenvorrichtung;
Fig. 4 und 5 Ansichten einer Lichtquellenhalterung und einer Optikelementhalterung der Beleuchtungseinheit; und
Fig. 6 Lamellen der Lamellenvorrichtung.

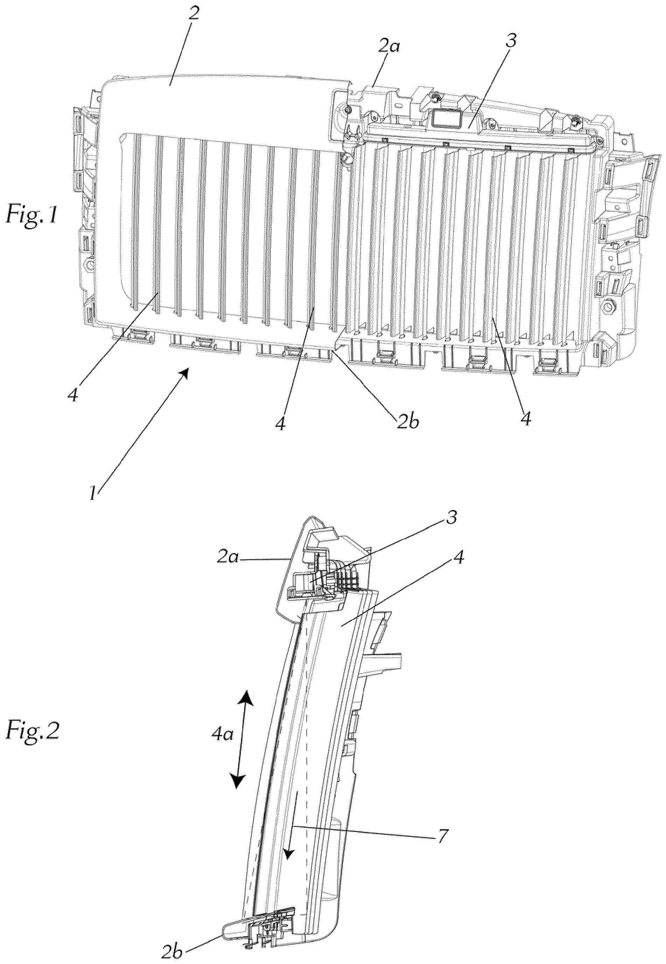

Fig. 1 zeigt eine Lamellenvorrichtung 1 für ein Kraftfahrzeug, wobei die Lamellenvorrichtung 1 eine Rahmenvorrichtung 2 und eine Beleuchtungseinheit 3 umfasst. An der Rahmenvorrichtung 2 sind mehrere Lamellen 4 befestigt, wobei die Lamellen 4 in ersten, gleich großen, Abständen zueinander beabstandet sind. Die Rahmenvorrichtung 2 und die Lamellen 4 liegen in derselben Ebene. Die Rahmenvorrichtung 2 ist als ein in sich geschlossener Rahmen ausgebildet. Die Rahmenvorrichtung 2 weist eine Rahmenoberseite 2a und eine der Rahmenoberseite 2a gegenüberliegende Rahmenunterseite 2b auf, wobei sich die Lamellen 4 von der Rahmenoberseite 2a zur Rahmenunterseite 2b erstrecken. Die Rahmenvorrichtung 2 ist beispielsweise ein Kühlergrill für ein Kraftfahrzeug. In Fig. 1 ist, zur Vereinfachung, die Beleuchtungseinheit 3 nur an der rechten Hälfte der Rahmenvorrichtung 2 angeordnet. Bevorzugt sind zwei Beleuchtungseinheiten 3 vorgesehen, durch welche alle Lamellen 4 der Rahmenvorrichtung 2 beleuchtet werden können. Es kann auch vorgesehen sein, mit einer Beleuchtungseinheit 3 alle Lamellen 4 der Rahmenvorrichtung 2 zu beleuchten. In diesem Fall weisen die Beleuchtungseinheit 3 und die Rahmenvorrichtung 2 im Wesentlichen die gleiche Länge auf.

Wie in Fig. 2 ersichtlich, verläuft eine Beleuchtungsrichtung 7 der Lichtquellen von der Rahmenoberseite 2a zur Rahmenunterseite 2b, im Wesentlichen parallel zur Längsrichtung 4a der Lamellen 4. Das Licht, welches von der Beleuchtungseinheit 3 abgestrahlt wird, breitet sich jeweils zwischen zwei benachbarten Lamellen 4 aus.

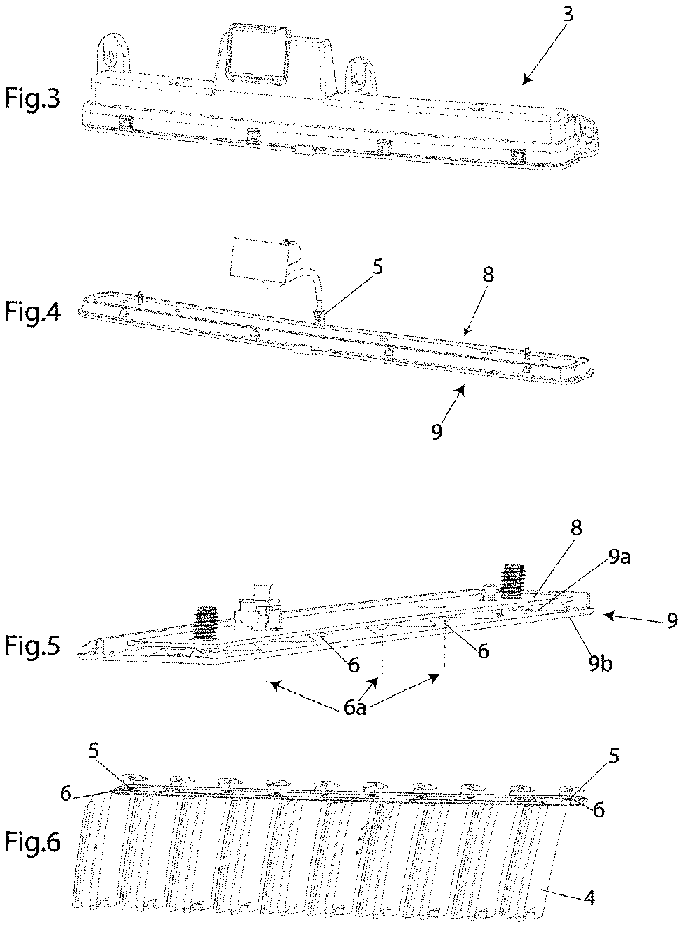

In den Fig. 3 bis 6 sind verschiedene, vereinfachte Darstellungen der Beleuchtungseinheit 3 dargestellt. Auf die Darstellung von nicht wesentlichen Komponenten wurde in den Ansichten verzichtet. Die Beleuchtungseinheit 3 weist mehrere Lichtquellen 5 und mehrere Optikelemente 6 auf. In den Fig. 4 und 5 wird zur Vereinfachung nur eine Lichtquelle 5 gezeigt. Bei einer Anzahl von n Lamellen 4, weist die Beleuchtungseinheit 3 n Lichtquellen 5 und n Optikelemente 6 auf (s. Fig. 6). Es können auch n-1 Lichtquellen 5 und n-1 Optikelemente 6 vorgesehen sein. Die Lichtquellen 5 sind dazu eingerichtet, Licht zu erzeugen und in einer Lichtausbreitungsrichtung abzustrahlen. Das Optikelement 6 ist in Lichtausbreitungsrichtung nach den Lichtquellen 5 angeordnet, wobei das Optikelement 6 derart ausgestaltet ist, dass das Licht der Lichtquelle 5 durch das Optikelement 6 durchtritt und sich nach dem Durchtritt in der Beleuchtungsrichtung 7 ausbreitet. Die Optikelemente 6 sind in dem gezeigten Ausführungsbeispiel als Linsen, insbesondere als Kollimatorlinsen bzw. TIR-Linsen, ausgebildet. Die mehreren Lichtquellen 5 sind an einer planen Oberfläche einer Lichtquellenhalterung 8 in zweiten Abständen zueinander angeordnet. Die Lichtquellenhalterung 8 ist in dem gezeigten Ausführungsbeispiel als Leiterplatte ausgebildet. Die mehreren Optikelemente 6 sind an einer Optikelementhalterung 9 angeordnet sind. Die Optikelementhalterung 9 ist im Wesentlichen plattenförmig ausgestaltet und weist eine Oberseite 9a und eine Unterseite 9b auf (s. Fig. 5). Die mehreren Optikelemente 6 sind an der Optikelementhalterung 9 in dritten Abständen zueinander angeordnet, wobei die optischen Achsen 6a der Optikelemente 6 jeweils orthogonal zur Oberseite 9a und Unterseite 9b der Optikelementhalterung 9 orientiert sind. Die ersten, zweiten und dritten Abstände sind gleich groß.

Die Lichtquellenhalterung 8 ist zu der Optikelementhalterung 9 derart angeordnet, dass die Oberfläche der Lichtquellenhalterung 8, an der die mehreren Lichtquellen 5 befestigt sind, der Oberseite 9a der Optikelementhalterung 9 derart zugewandt ist, dass jeder Lichtquelle 5 ein, vorzugsweise genau ein, Optikelement 6 gegenüberliegt, wodurch ein Lichtquellen-Optikelement-Paar gebildet ist. Jede Lichtquelle 5 strahlt Licht auf das der Lichtquelle 5 gegenüberliegende Optikelement 6 ab. Jedes Optikelement 6 ist dazu eingerichtet, das Licht der ihr gegenüberliegenden Lichtquelle 5 in einer Beleuchtungsrichtung 7 abzustrahlen, wobei die Beleuchtungsrichtungen 7 der einzelnen Lichtquellen-Optikelement-Paare im Wesentlichen parallel zueinander und parallel zur Längsrichtung der Lamellen 4 sind.

In Fig. 3 weist die Beleuchtungseinheit 3 ein Gehäuse auf, in welchem die Lichtquellenhalterung 8 und die Optikelementhalterung 9 angeordnet sind, wobei die Optikelementhalterung 9 als Abdeckscheibe für das Gehäuse dient. Wie in Fig. 1 und in Fig. 6 (stark vereinfacht) gezeigt, ist die Beleuchtungseinheit an der Rahmenvorrichtung 2 derart angeordnet, das ein Lamellenzwischenraum, welcher zwischen zwei benachbarten Lamellen 4 gebildet ist, von einem, vorzugsweise genau einem, Lichtquellen-Optikelement-Paar beleuchtet werden kann. Die jeweiligen Beleuchtungsrichtungen 7 der Lichtquellen-Optikelement-Paare verlaufen jeweils parallel zur Längsrichtung 4a der entsprechenden Lamellen 4.

Eine indirekte Bestrahlung benachbarter Lamellen 4 mittels Reflexion ist in Fig. 6 dargestellt. Die Beleuchtungsrichtung 7 ist in diesem Fall nicht parallel zur Längsrichtung 4a der Lamellen 4, sondern weist einen, vorzugsweise spitzen, Winkel zur Längsrichtung 4a auf.

Durch die Reflexion des Lichts an einer ersten Lamelle 4, kommt es zur indirekten Beleuchtung einer benachbarten Lamelle 4.

Die Beleuchtungseinheit 3, welche die Lichtquellenhalterung 8 und die Optikelementhalterung 9 aufweist, ist an der Rahmenoberseite 2a der Rahmenvorrichtung 2 angeordnet.

## Patentansprüche

1. Lamellenvorrichtung (1) für ein Kraftfahrzeug, wobei die Lamellenvorrichtung (1) zumindest eine Rahmenvorrichtung (2) und zumindest eine Beleuchtungseinheit (3) umfasst, wobei an der Rahmenvorrichtung (2) mehrere Lamellen (4) befestigt sind, wobei die Lamellen (4) in ersten Abständen zueinander beabstandet sind, wobei vorzugsweise die ersten Abstände zwischen zwei benachbarten Lamellen (4) jeweils gleich groß sind, wobei die Rahmenvorrichtung (2) und die mehreren Lamellen (4) in einer, insbesondere derselben, Ebene liegen, wobei
die Beleuchtungseinheit (3) zumindest eine Lichtquelle (5) und ein Optikelement (6) umfasst, wobei die Lichtquelle (5) dazu eingerichtet ist, Licht zu erzeugen und in einer Lichtausbreitungsrichtung abzustrahlen, wobei das Optikelement (6) in Lichtausbreitungsrichtung nach der Lichtquelle (5) angeordnet ist, wobei das Optikelement (6) derart ausgestaltet ist, dass das Licht der Lichtquelle (5) durch das Optikelement (6) durchtritt und sich nach dem Durchtritt in einer Beleuchtungsrichtung (7) ausbreitet, wobei die Optikelemente (6) als Linsen ausgebildet sind, wobei
die Beleuchtungseinheit (3) an der Rahmenvorrichtung (2) derart angeordnet ist, dass sich das Licht, welches aus dem Optikelement (6) austritt, zwischen zwei benachbarten Lamellen (4) ausbreitet, wobei die Beleuchtungseinheit (3) mehrere Lichtquellen (5) und mehrere Optikelemente (6) aufweist,
wobei
die Rahmenvorrichtung (2) eine Rahmenoberseite (2a) und eine der Rahmenoberseite gegenüberliegende Rahmenunterseite (2b) aufweisen, wobei sich die Lamellen (4) von der Rahmenoberseite (2a) zur Rahmenunterseite (2b) erstrecken, wobei die Rahmenvorrichtung (2) die räumliche Ausdehnung der Lamellen (4) begrenzt,
wobei die mehreren Lichtquellen (5) an einer, vorzugsweise planen, Oberfläche einer Lichtquellenhalterung (8) in, insbesondere gleichmäßigen, zweiten Abständen zueinander angeordnet sind, wobei die mehreren Optikelemente (6) an einer Optikelementhalterung (9) angeordnet sind, welche eine Oberseite (9a) und eine Unterseite (9b) aufweist, wobei die mehreren Optikelemente (6) an der Optikelementhalterung (9) in, vorzugsweise gleichmäßigen, dritten Abständen zueinander angeordnet sind, wobei die optischen Achsen (6a) der Optikelemente (6) jeweils orthogonal zur Oberseite (9a) und Unterseite (9b) der Optikelementhalterung (9) orientiert sind, und wobei
die Lichtquellenhalterung (8) zu der Optikelementhalterung (9) derart angeordnet ist, dass die Oberfläche der Lichtquellenhalterung (8), an der die mehreren Lichtquellen (5) befestigt sind, der Oberseite (9a) der Optikelementhalterung (9) derart zugewandt ist, dass jeder Lichtquelle (5) ein, vorzugsweise genau ein, Optikelement (6) gegenüberliegt, wodurch ein Lichtquellen-Optikelement-Paar gebildet ist, wobei jede Lichtquelle (5) Licht auf das der Lichtquelle (5) gegenüberliegende Optikelement (6) abstrahlt, wobei jedes Optikelement (6) dazu eingerichtet ist, das Licht der ihr gegenüberliegenden Lichtquelle (5) in einer Beleuchtungsrichtung (7) abzustrahlen, wobei die Beleuchtungsrichtungen (7) der einzelnen Lichtquellen-Optikelement-Paare im Wesentlichen parallel zueinander sind.

2. Lamellenvorrichtung (1) nach Anspruch 1, wobei die Rahmenvorrichtung (2) als ein in sich geschlossener Rahmen ausgebildet ist.

3. Lamellenvorrichtung (1) nach Anspruch 1 oder 2, wobei die Beleuchtungsrichtung (7) von der Rahmenoberseite (2a) zur Rahmenunterseite (2b), im Wesentlichen parallel zur Längsrichtung (4a) der Lamellen (4), verläuft.

4. Lamellenvorrichtung (1) nach einem der vorhergehenden Ansprüche, wobei bei einer Anzahl von n Lamellen (4), die Beleuchtungseinheit (3) n oder n-1 Lichtquellen (5) und n oder n-1 Optikelemente (6) aufweist.

5. Lamellenvorrichtung (1) nach einem der Ansprüche 1 bis 4, wobei die Optikelementhalterung (9) im Wesentlichen plattenförmig ausgestaltet ist.

6. Lamellenvorrichtung (1) nach einem der Ansprüche 1 bis 5, wobei die ersten, zweiten und dritten Abstände gleich sind.

7. Lamellenvorrichtung (1) nach einem der Ansprüche 1 bis 6, wobei die Lichtquellenhalterung (8) und die Optikelementhalterung (9) an der Rahmenvorrichtung (2) derart angeordnet sind, das ein Lamellenzwischenraum, welcher zwischen zwei benachbarten Lamellen (4) gebildet ist, von einem, vorzugsweise genau einem, Lichtquellen-Optikelement-Paar beleuchtbar ist, wobei die jeweiligen Beleuchtungsrichtungen (7) der Lichtquellen-Optikelement-Paare jeweils parallel zur Längsrichtung (4a) der entsprechenden Lamellen (4) verlaufen.

8. Lamellenvorrichtung (1) nach einem der Ansprüche 1 bis 7, wobei die Lichtquellenhalterung (8) und die Optikelementhalterung (9) an der Rahmenoberseite (2a) und/oder der Rahmenunterseite (2b) der Rahmenvorrichtung (2) angeordnet sind.

9. Lamellenvorrichtung (1) nach einem der vorhergehenden Ansprüche, wobei die Rahmenvorrichtung (2) als Kühlergrill für ein Kraftfahrzeug ausgebildet ist.

10. Beleuchtungsvorrichtung für ein Kraftfahrzeug in Form einer Lamellenvorrichtung (1) nach einem der Ansprüche 1 bis 9.

11. Kraftfahrzeug, umfassend eine Lamellenvorrichtung (1) nach einem der Ansprüche 1 bis 9 oder eine Beleuchtungsvorrichtung nach Anspruch 10.

## Claims

1. Slat device (1) for a motor vehicle, the slat device (1) comprising at least one frame device (2) and at least one lighting unit (3),
a plurality of slats (4) being fastened to the frame device (2), the slats (4) being spaced apart from one another at first distances, preferably the first distances between two adjacent slats (4) each being of equal size, the frame device (2) and the plurality of slats (4) lying in one, in particular the same, plane, wherein
the illumination unit (3) comprises at least one light source (5) and one optical element (6), wherein the light source (5) is arranged to generate light and to emit light in a light propagation direction, wherein the optical element (6) is arranged downstream of the light source (5) in the light propagation direction the optical element (6) being designed in such a way that the light from the light source (5) passes through the optical element (6) and propagates in an illumination direction (7) after passing through, the optical elements (6) being designed as lenses, wherein
the illumination unit (3) is arranged on the frame device (2) in such a way that the light which emerges from the optical element (6) propagates between two adjacent lamellae (4), the illumination unit (3) having a plurality of light sources (5) and a plurality of optical elements (6)
wherein
the frame device (2) having a frame upper side (2a) and a frame lower side (2b) opposite the frame upper side, the lamellae (4) extending from the frame upper side (2a) to the frame lower side (2b), the frame device (2) limiting the spatial extent of the lamellae (4),
wherein the plurality of light sources (5) are arranged on a, preferably planar, surface of a light source holder (8) at, in particular, uniform second distances from one another, wherein the plurality of optical elements (6) are arranged on an optical element holder (9) which has an upper side (9a) and a lower side (9b), wherein the plurality of optical elements (6) are arranged on the optical element holder (9) at, preferably uniform, third distances from each other, wherein the optical axes (6a) of the optical elements (6) are oriented orthogonally to the upper side (9a) and lower side (9b) of the optical element holder (9), respectively, and wherein
the light source holder (8) is arranged relative to the optical element holder (9) in such a way that the surface of the light source holder (8) to which the plurality of light sources (5) are attached faces the upper side (9a) of the optical element holder (9) in such a way that each light source (5) has one, preferably exactly one, optical element (6) opposite it, thereby forming a light source-optical element pair, each light source (5) emitting light onto the optical element (6) opposite the light source (5), each optical element (6) being arranged to emit the light of the light source (5) opposite it in an illumination direction (7), the illumination directions (7) of the individual light source-optical element pairs being essentially parallel to one another.

2. Slat device (1) according to claim 1, wherein the frame device (2) is formed as a self-contained frame.

3. Slat device (1) according to claim 1 or 2, wherein the illumination direction (7) extends from the frame upper side (2a) to the frame lower side (2b), substantially parallel to the longitudinal direction (4a) of the slats (4).

4. Slat device (1) according to one of the preceding claims, wherein, for a number of n slats (4), the illumination unit (3) comprises n or n-1 light sources (5) and n or n-1 optical elements (6).

5. Slat device (1) according to any one of claims 1 to 4, wherein the optical element holder (9) is substantially plate-shaped.

6. Slat device (1) according to any one of claims 1 to 5, wherein the first, second and third distances are equal.

7. Slat device (1) according to one of the claims 1 to 6, wherein the light source holder (8) and the optical element holder (9) are arranged on the frame device (2) in such a way that a slat interspace, which is formed between two adjacent slats (4), can be illuminated by one, preferably exactly one, light source-optical element pair, wherein the respective illumination directions (7) of the light source-optical element pairs each run parallel to the longitudinal direction (4a) of the corresponding slats (4).

8. Slat device (1) according to any one of claims 1 to 7, wherein the light source holder (8) and the optical element holder (9) are arranged on the frame upper side (2a) and/or the frame lower side (2b) of the frame device (2).

9. Slat device (1) according to one of the preceding claims, wherein the frame device (2) is designed as a radiator grille for a motor vehicle.

10. Lighting device for a motor vehicle in the form of a slat device (1) according to any one of claims 1 to 9.

11. Motor vehicle comprising a slat device (1) according to any one of claims 1 to 9 or a lighting device according to claim 10.

## Revendications

1. Dispositif à lamelles (1) pour un véhicule automobile, le dispositif à lamelles (1) comprenant au moins un dispositif de cadre (2) et au moins une unité d'éclairage (3),
plusieurs lamelles (4) étant fixées au dispositif de cadre (2), les lamelles (4) étant espacées les unes des autres à des premières distances, les premières distances entre deux lamelles (4) voisines étant de préférence toujours égales, le dispositif de cadre (2) et les plusieurs lamelles (4) étant situés dans un même plan, en particulier dans le même plan, le dispositif de cadre (2) et les plusieurs lamelles (4) étant situés dans le même plan, le dispositif de cadre (2) et les plusieurs lamelles (4) étant situés dans le même plan
l'unité d'éclairage (3) comprend au moins une source de lumière (5) et un élément optique (6), la source de lumière (5) étant conçue pour générer de la lumière et l'émettre dans une direction de propagation de la lumière, l'élément optique (6) étant disposé après la source de lumière (5) dans la direction de propagation de la lumière, l'élément optique (6) étant conçu de telle sorte que la lumière de la source lumineuse (5) traverse l'élément optique (6) et se propage après le passage dans une direction d'éclairage (7), les éléments optiques (6) étant réalisés sous forme de lentilles, où
l'unité d'éclairage (3) est disposée sur le dispositif de cadre (2) de telle sorte que la lumière qui sort de l'élément optique (6) se propage entre deux lamelles (4) voisines, l'unité d'éclairage (3) présentant plusieurs sources lumineuses (5) et plusieurs éléments optiques (6),
où
le dispositif de cadre (2) présente une face supérieure de cadre (2a) et une face inférieure de cadre (2b) opposée à la face supérieure de cadre, les lamelles (4) s'étendant de la face supérieure de cadre (2a) à la face inférieure de cadre (2b), le dispositif de cadre (2) limitant l'extension spatiale des lamelles (4),
les multiples sources lumineuses (5) étant disposées sur une surface, de préférence plane, d'un support de sources lumineuses (8) à des deuxièmes distances, en particulier régulières, les unes des autres, les multiples éléments optiques (6) étant disposés sur un support d'éléments optiques (9) qui présente une face supérieure (9a) et une face inférieure (9b), dans lequel la pluralité d'éléments optiques (6) sont disposés sur le support d'éléments optiques (9) à des troisièmes distances, de préférence régulières, les axes optiques (6a) des éléments optiques (6) étant orientés respectivement orthogonalement à la face supérieure (9a) et à la face inférieure (9b) du support d'éléments optiques (9), et dans lequel
le support de source lumineuse (8) est disposé par rapport au support d'élément optique (9) de telle sorte que la surface du support de source lumineuse (8), sur laquelle la pluralité de sources lumineuses (5) est fixée, est tournée vers la face supérieure (9a) du support d'élément optique (9) de telle sorte qu'un élément optique (6), de préférence exactement un, est opposé à chaque source lumineuse (5), formant ainsi une paire source lumineuse-élément optique, chaque source lumineuse (5) émettant de la lumière sur l'élément optique (6) opposé à la source lumineuse (5), chaque élément optique (6) étant conçu pour émettre la lumière de la source lumineuse (5) qui lui fait face dans une direction d'éclairage (7), les directions d'éclairage (7) des différentes paires source lumineuse-élément optique étant sensiblement parallèles entre elles.

2. Dispositif à lamelles (1) selon la revendication 1, dans lequel le dispositif à cadre (2) est conçu comme un cadre fermé sur lui-même.

3. Dispositif à lamelles (1) selon la revendication 1 ou 2, dans lequel la direction d'éclairage (7) s'étend de la face supérieure (2a) du cadre à la face inférieure (2b) du cadre, sensiblement parallèlement à la direction longitudinale (4a) des lamelles (4).

4. Dispositif à lamelles (1) selon l'une des revendications précédentes, dans lequel, pour un nombre n de lamelles (4), l'unité d'éclairage (3) comprend n ou n-1 sources lumineuses (5) et n ou n-1 éléments optiques (6).

5. Dispositif à lamelles (1) selon l'une quelconque des revendications 1 à 4, dans lequel le support d'éléments optiques (9) est configuré sensiblement en forme de plaque.

6. Dispositif à lamelles (1) selon l'une des revendications 1 à 5, dans lequel les première, deuxième et troisième distances sont égales.

7. Dispositif à lamelles (1) selon l'une des revendications 1 à 6, dans lequel le support de source lumineuse (8) et le support d'élément optique (9) sont disposés sur le dispositif de cadre (2) de telle sorte qu'un espace intermédiaire entre les lamelles, qui est formé entre deux lamelles (4) voisines, peut être éclairé par une paire d'éléments optiques de source lumineuse, de préférence exactement une paire, les directions d'éclairage (7) respectives des paires d'éléments optiques de source lumineuse s'étendant respectivement parallèlement à la direction longitudinale (4a) des lamelles (4) correspondantes.

8. Dispositif à lamelles (1) selon l'une des revendications 1 à 7, dans lequel le support de source lumineuse (8) et le support d'élément optique (9) sont disposés sur la face supérieure (2a) et/ou la face inférieure (2b) du cadre (2).

9. Dispositif à lamelles (1) selon l'une quelconque des revendications précédentes, dans lequel le dispositif de cadre (2) est configuré comme une calandre pour un véhicule automobile.

10. Dispositif d'éclairage pour véhicule automobile se présentant sous la forme d'un dispositif à lamelles (1) selon l'une quelconque des revendications 1 à 9.

11. Véhicule automobile comprenant un dispositif à lamelles (1) selon l'une des revendications 1 à 9 ou un dispositif d'éclairage selon la revendication 10.
